# EUROPEAN PATENT SPECIFICATION

(11) **EP 0 412 617 B1**
(45) Date of publication and mention of the grant of the patent: **02.02.1994**
(21) Application number: 90202141.9
(22) Date of filing: 06.08.1990
(51) Int. Cl.: B01D 29/09, B01D 29/84

(54) **Frier having filtering mechanism**
Fritiergerät mit Filteranlage
Friteuse avec dispositif filtrant

(30) Priority: 11.08.1989 JP 208473/89
(43) Date of publication of application: 13.02.1991
(73) Proprietor: MAITO INDUSTRIES CO., LTD., Kobe-shi, Hyogo 657 (JP); NISSIN FOOD PRODUCTS CO., LTD., Osaka 532 (JP)
(72) Inventor: Akazawa, Hozumi, C/o Maito Industries Co., Ltd., Nada-ku, Kobe-Shi, Hyogo 657 (JP)
(74) Representative: de Vries, Johannes Hendrik Fokke

(56) References cited:
- DE-A- 2 856 626
- DE-B- 1 223 806
- FR-A- 2 403 813
- GB-A- 2 175 796
- US-A- 2 635 759

## Description

This invention relates generally to friers for frying meat, fish, croquettes, potatoes and so on and, more particularly, to a frier having filtering mechanism for removing such impurities as fractions of fried foods and the like for prevention of oil oxidation.

The frier of the kind referred to is arranged for frying a large amount of food within a large volume of heated edible oil and is utilized mostly in the field of, for example, dine-out or fast-food industry.

In frying a large amount of foods, the impurities are accumulated and tending to attach to frying foods, and the oxidation of oil is thereby promoted to quickly render the fried foods to become unpalatable. In view of this, there has been suggested such an arrangement that a frier is coupled through oil suction and discharge pumps to a filtering tank having a filtering paper for filtering in the tank the impurities out of the oil and thereafter circulating the oil back to the frier. While this arrangement allows an advantage to be attained in the possibility of automatic filtration of the edible oil, a high viscosity of the oil renders the impurities of a relatively larger amount to stay in the oil so as to cause the filtering paper to be clogged quickly by the impurities and thus to be exchanged frequently. Since the exchange of the filtering paper has had to be carried out by stopping the use of the frier and after a sufficient time for cooling the oil, it has been rather remarkable in the disadvantage in respect of required labour, working time and costs.

In order to solve this problem, the present inventor has suggested a frier incorporating filtering mechanism such as disclosed in U.S.-A- 4,867,873, in which an oil suction zone is defined within a frier housing, an oil filtering web is disposed for movement along top surface of this suction zone, and an electrically heated, bar-shaped heater is disposed above the suction zone. In carrying out the frying and filtering operations with this arrangement, it is made possible to have only a clogged portion of the filtering web as disposed on the top surface of the suction zone moved off from the top surface and a following fresh portion of the web disposed on the top surface of the suction zone, so that the exchange work of the filtering paper in the foregoing known arrangement is no more required and the labour, working time and costs can be well reduced.

In this frier incorporating the filtering mechanism of U.S.-A- 4,867,873, however, there has been a problem that the heater disposed to be above the filtering web forming the filtering mechanism is subjected to an adherence thereto of the impurities so as to be lowered in the heating efficiency with respect to the edible oil and, in some occasion, the oil cannot be maintained at a proper frying temperature. In this event, an increment in the number of the bar-shaped heater may increase the heating value with respect to the oil so as to reach a desired frying temperature, but there arises such a risk that the edible oil is lowered in the fluidity with respect to the filtering web due to that available frying zone is narrowed or that the impurities adhere to the increased number of the heaters, so as to cause the filtering efficiency with respect to the edible oil deteriorated.

A primary object of the present invention is, therefore, to provide a frier having a filtering mechanism which is free of the adhesion of the impurities to the heater and is capable of raising the temperature of the edible oil within the frier at a high heating efficiency by means of a large number of heaters.

According to the present invention, this object can be realized by a frier having a filtering mechanism wherein a partition member allowing the edible oil to pass therethrough is disposed within a frier housing having therein a heating means so as to define a heating zone below the member, a filtering member is disposed for movement along the partition member at a portion of the filtering member, and the oil is circulated by means of a pump disposed between oil outlet and inlet ports of the housing for leading the oil through the filtering member and the zone below the partition member out of the outlet port and returning the led-out oil into the housing through the inlet port at a position above the partition member, characterized in that the heating means comprises a large number of heaters disposed in the heating zone below the filtering and partition members.

In the foregoing frier having the filtering mechanism according to the present invention, the arrangement is so made that the edible oil after being subjected to the filtration is heated by the large number of the heaters at a high heating efficiency and is thereafter refluxed to a frying zone within the frier housing, so that the oil heating efficiency can be prevented from being deteriorated by the adhesion of the impurities to the heaters, and a larger number of the heaters can be arranged for ready increment of the heating capacity since the heaters made free of the impurity adhesion never cause oil flow path between the respective heaters to be narrower.

Other objects and advantages of the present invention shall be made clear in the following description of the invention detailed with reference to an embodiment shown in accompanying drawings.

FIGURE 1 is a side elevation of the frier having the filtering mechanism in an embodiment according to the present invention; and

FIG. 2 is a sectioned view at a part of the frier shown in FIG. 1.

The present invention shall now be described with reference to the embodiment shown in the drawings, but it should be appreciated that its intention is not to limit the invention only to the embodiment shown but rather to include all alterations, modifications and equivalent arrangements possible within the scope of appended claims.

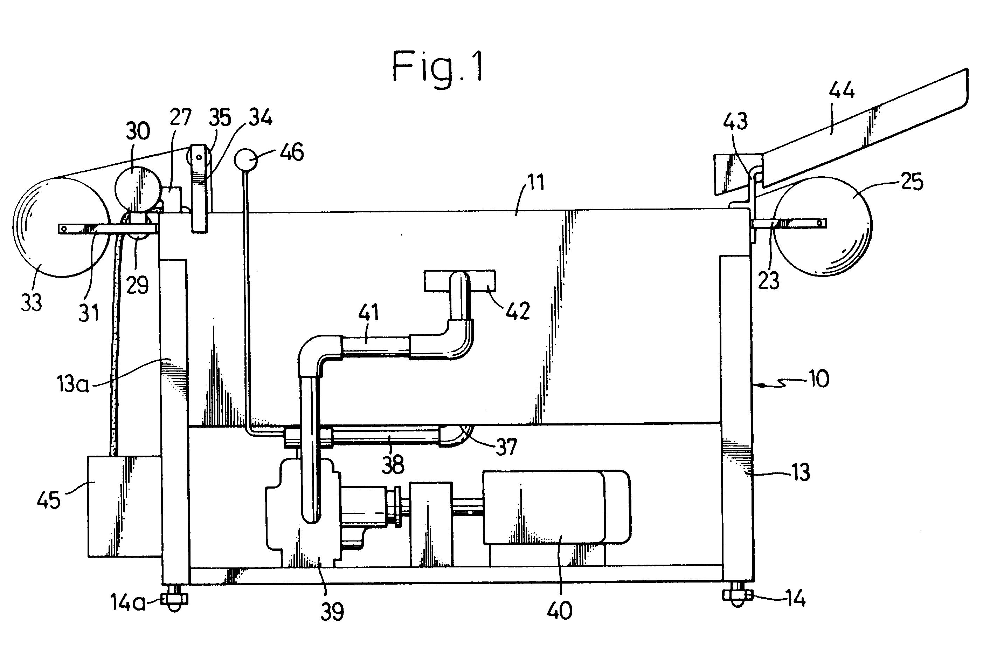

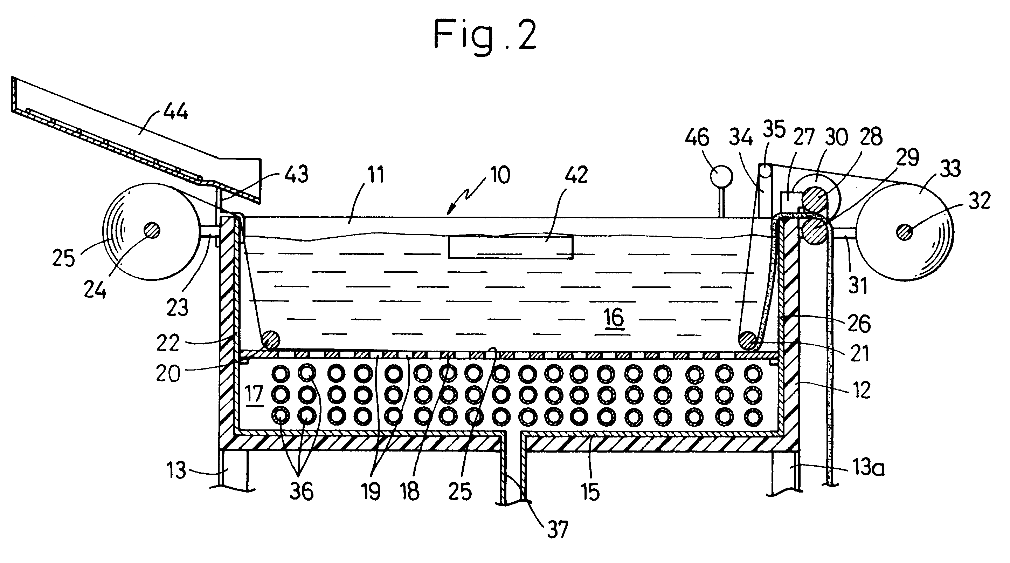

Referring to FIGS. 1 and 2, there is shown a frier which performs an ordinary frier function and is additionally provided with a filtering mechanism for preventing the edible oil from being oxidized. The frier 10 comprises a frier housing 11 opened on the top side and accommodating therein the oil, and this housing 11 should preferably be provided all over the outer surface with a layer of such heat insulator 12 as a rock wool. Fixed to four outer bottom corners of the housing 11 are two pairs of legs 13 and 13a by means of, for example, screws, and two pairs of casters 14 and 14a may be provided to lower ends of these legs 13 and 13a.

A partition plate 18 is disposed within the housing 11 at a level of a predetermined height from a bottom plate 15 so as to define above and below the partition plate a frying zone 16 and a heating zone 17, respectively, while the partition plate 18 is provided with many perforations 19 through which the edible oil can freely pass. Guide rollers 20 and 21 extending in width direction of the frier housing 11 are disposed in the frier housing 11 to be immediately above both end portions of the partition plate 18, and these guide rollers 20 and 21 are held rotatably preferably by engaging pivot pins projected from both ends of the rollers in opposing recesses in inside walls of the housing (not shown).

A pair of pivot arms 23 (only one of which is shown in the drawings) are horizontally extended from an outer longitudinal top end surface of one end wall 22 of the frier housing 11, between which arms a filter roller 24 is pivotably held, and a filter web 25 of a width slightly smaller than the inner width of the housing 11 is wound on the roller 24. The filter web 25 is made preferably of inexpensive, nonwoven filtering paper which allows the edible oil to pass therethrough but prevents the fried food fractions and the like impurities from passing therethrough.

On the top end surface of the other end wall 26 of the frier housing 11, a pair of L-shaped support arms 27 (only one of which is shown) are fixedly mounted to extend their one bent leg downward out of the end wall 26, and a pair of nip rollers 28 and 29 are rotatably supported between these extended legs of the arms 27 to be mutually in parallel and vertically side-by-side relationship. One of these nip rollers 28 and 29, for example, the upper side roller 28 is directly coupled to an output shaft of a motor 30 for being thereby rotated while the lower roller 29 peripherally engaging with the upper roller 28 is rotated by the roller 28 in reverse direction thereto. Further, a pair of pivot arms 31 (only one of which is shown) are projected horizontally from the outer surface of the same end wall 26, a retentive paper roller 32 is pivotably supported between extended ends of these arms 31, and a retentive paper web 33 of a width slightly smaller than the inner width of the housing 11 is wound on the roller 32. This retentive paper web 33 may be of any material just enough for holding the impurities deposited on the filter web 25 and may not have any filtering function, but should desirably be a thin material in general. In the vicinity of the end wall 26 of the frier housing 11, a pair of support arms 34 (only one of which is shown) are erected, and a guide roller 35 is pivotably supported between them for guiding the retentive paper web 33 in tensioned state.

Within the heating zone 17 defined by the partition plate 18 inside the frier housing 11, a large number of heaters 36 which constitute a heating means are disposed, and these heaters 36 are formed by smoke pipes acting as heating tubes which are heated by a hot gas passed through the tubes as heated by a gas burner as a heating source of a so-called intermediate heat source type heating process. The bottom plate 15 is provided with an outlet port 37 for allowing the edible oil to flow out of the frier housing 11 through a suction duct 38 which couples the outlet port 37 to a suction and discharge pump 39 actuated by a driving motor 40 while a discharge side of this pump 39 is coupled through a discharge duct 41 to an oil inlet port 42 made in one side wall of the frier housing 11. This oil inlet port 42 is positioned at a level higher than the partition plate 18 in the frier housing 11 so that the oil within the housing 11 can be kept at a level higher than the partition plate 18, that is, to be higher than the level of the filter web 25.

Further, an oil straining-off tray 44 is mounted through a support leg 43 onto the top end of the one end wall 22 of the frier housing 11, while the support leg 43 is designed to space the tray 44 from the top end of the wall 22 for smooth supply of the filter web 25 over the top end into the housing. On the side of the other end wall 26 of the housing, a box 45 is provided as disposed right below the nip rollers 28 and 29 for receiving the filter web 25 discharged out of the housing with the impurities deposited on the web as retained by the retentive paper web 33. On a suction side of the pump 39 to which the suction duct 38 is coupled, a pressure switch 46 is mounted, together with a pressure gauge (not shown) for rendering oil pressure value to be visible, as occasion demands. This pressure switch 46 is turned ON when the oil pressure on the suction side of the pump 39 has exceeded a predetermined value, and an output of the pressure switch 46 is provided to the motor 30 to cause it automatically actuated. That is, as the filter web 25 is clogged at its portion disposed above the heating zone 17 and partition plate 18 and the oil pressure on the suction side of the pump 39 rises, the pressure switch 46 detects such raised pressure to be turned ON for actuating the motor 30, the filter web 25 is thereby moved so as to position a following fresh portion of the web above the heating zone 17 and partition plate 18.

Referring next to the operation of the frier having the filtering mechanism according to the present invention, a predetermined amount of the edible oil is now poured in the frier housing 11, thereafter the heaters 36 are heated with the hot gas passed through them or by feeding an electric current to them, and the motor 40 is simultaneously energized, upon which the edible oil within the heating zone 17 and in the frier housing 11 as well is heated, a negative pressure due to the actuation of the pump 39 is applied to the heating zone 17 and a suction force toward the outlet port 37 acts on the oil. Consequently, the oil is drawn through the filter web 25, partition plate 18 having many perforations 19, heating zone 17, outlet port 37 and suction duct 38 to the pump 39. The oil is refluxed from the discharge side of the pump 39 through the discharge duct 41 and inlet port 42 into the frier housing 11 again, so that the oil within the frier housing 11 will be kept at a predetermined temperature while being circulated sequentially through such flow paths as above.

When the food is continuously fried within the frier housing 11, such fried food fractions and the like impurities that cause the oil in use oxidized are produced in the oil, and the oil circulation by means of the pump 39 causes the impurities filtrated by the filter 25 to be deposited thereon. As the impurities are deposited accumulatively much on the filter web 25, the oil pressure on the inlet side of the pump 39 increases enough to actuate the pressure switch 46 for driving the motor 30, and thus contaminated portion of the filter web 25 on the partition plate 18 is moved and a following fresh portion of the web is placed on the partition plate 18. In this case, the pressure switch 46 has an operating value set preferebly at (39·9 kPa. to 66·5 kPa.)(300 to 500mmHg).

Accompanying the removal of the contaminated portion of the filter web 25, the retentive paper web 33 is paid out of the roller 32 and delivered through the guide rollers 35 and 21 over the filter web 25 to cover its upper side on which the impurties are deposited. Here, the both webs 25 and 33 are subjected to a proper tension occurring between the guide roller and the nip rollers 28 and 29 so that the impurities of the fried food fractions deposited on the filter web 25 are stably carried as held between the both webs 25 and 33 so as to be collected in the box 45 without falling down back into the oil in the frier housing 11.

Through repetition of the foregoing operation, the edible oil placed within the frier housing 11 can be subjected to the heating and filtering in sequential manner. During this operation, the oil filtrated through the filter web 25 is made to flow into the heating zone 17 so that no impurity will adhere to the many heaters 36 disposed in the heating zone 17 so as to render oil flow path between the respective heaters 36 to be narrowed, and, as will be readily appreciated, a larger number of the heaters 36 can be densely arranged within a restricted zone for remarkable improvements in the heating efficiency and heating capacity. In practice, it has been found that, according to the frier of the present invention, the heating capacity with respect to the oil is increased at least by 2 to 3 times larger than in the case of the known frier.

## Claims

1. A frier (10) having a filtering mechanism wherein a partition member (18) allowing an edible oil to pass therethrough is disposed in a frier housing (11) having therein an oil heating means, a filtering member, a portion of which being disposed for movement along the partition member (18), and the oil being circulated by means of a pump (39) disposed between oil outlet (37) and inlet (42) ports of the housing for leading the oil through the filtering member and the heating means out of the outlet port (37) and returning the led-out oil into the housing (11) through the inlet port (42) at a position above the partition member (18), characterized in that the heating means comprises heaters (36) disposed in a heating zone (17) below said filtering and partition (18) members.

2. A frier according to claim 1, characterized in that said heaters (36) are smoke pipes provided for passing therethrough a heated fluid.

3. A frier according to claim 2, characterized in further comprising a gas burner as a heat source for providing a hot gas to said smoke pipes as said heated fluid.

## Patentansprüche

1. Frittiereinrichtung (10) mit einem Filtermechanismus, wobei ein Abscheider (18), der für Speiseöl durchlässig ist, in einem Gehäuse (11) der Frittiereinrichtung (10) angeordnet ist, die eine Ölerhitzungseinrichtung aufweist,
mit einem Filter, von dem ein Teil zum Bewegen entlang des Abscheiders (18) angeordnet ist, und wobei das Öl mittels einer Pumpe (39) zirkuliert, welche zwischen Ölauslaß- (37) und Einlaßöffnungen (42) des Gehäuses angeordnet ist, um das Öl durch den Filter und die Erhitzungseinrichtung aus der Auslaßöffnung (37) abzuführen und das abgeführte Öl an einer Stelle oberhalb des Abscheiders (18) durch die Einlaßöffnung (42) in das Gehäuse (11) zurückzuführen,
dadurch **gekennzeichnet**,
daß die Erhitzungseinrichtung Heizelemente (36) aufweist, die in einer Aufheizzone (17) unterhalb des Filters und des Abscheiders (18) angeordnet sind.

2. Frittiereinrichtung nach Anspruch 1,
dadurch **gekennzeichnet**,
daß die Heizelemente (36) Leitungsrohre sind, welche von einem aufgeheizten Fluid durchströmbar sind.

3. Frittiereinrichtung nach Anspruch 2,
dadurch **gekennzeichnet**,
daß des weiteren ein Gasbrenner als Wärmequelle zur Speisung der Leitungsrohre mit einem Heißgas als aufgeheiztes Fluid vorgesehen ist.

## Revendications

1. Friteuse (10) comportant un mécanisme de filtration dans lequel un élément (18) de cloisonnement pouvant être traversé par une huile comestible est disposé dans un corps (11) de la friteuse renfermant des moyens de chauffage de l'huile, un élément filtrant dont une partie est disposée de façon à se déplacer le long de l'élément (18) de cloisonnement, et l'huile étant mise en circulation au moyen d'une pompe (31) disposée entre une sortie (37) d'huile et des orifices (42) d'entrée du corps pour conduire l'huile à travers l'élément filtrant et les moyens chauffants vers l'extérieur de l'orifice (37) de sortie et ramener l'huile, conduite à l'extérieur, dans le corps (11) en passant par l'orifice (42) d'entrée, en une position au-dessus de l'élément (18) de cloisonnement, caractérisée en ce que les moyens chauffants comprennent des éléments chauffants (36) disposés dans une zone chauffante (17) au-dessous desdits éléments de filtration et de cloisonnement (18).

2. Friteuse selon la revendication 1, caractérisée en ce que lesdits éléments chauffants (36) sont des tubes à fumée destinés à être parcourus par un fluide chauffé.

3. Friteuse selon la revendication 2, caractérisée en ce qu'elle comporte en outre un brûleur à gaz en tant que source de chaleur pour fournir auxdits tubes à fumée un gaz chaud constituant ledit fluide chauffé.
